# EUROPEAN PATENT SPECIFICATION

(11) **EP 2 278 176 B1**
(45) Date of publication and mention of the grant of the patent: **08.02.2012**
(21) Application number: 10170169.6
(22) Date of filing: 20.07.2010
(51) Int. Cl.: F16B 31/02, G01L 5/00

(54) **Method of preloading a coupling assembly**
Verfahren zum Vorladen einer Kupplungsanordnung
Procédé de pré-chargement d'un ensemble formant couplage

(30) Priority: 21.07.2009 US 506871
(43) Date of publication of application: 26.01.2011
(73) Proprietor: Honeywell International Inc., Morristown, NJ 07962 (US)
(72) Inventor: Shula, Brian Joseph, Morristown, NJ 07962-2245 (US); Watson, Bill Russell, Morristown, NJ 07962-2245 (US)
(74) Representative: Buckley, Guy Julian

(56) References cited:
- FR-A1- 2 841 273
- GB-A- 2 274 895

## Description

### TECHNICAL FIELD

Embodiments of the subject matter described herein relate generally to preloading a coupling assembly. More particularly, embodiments of the subject matter relate to assembling a nut and bolt assembly with an accurate preload.

### BACKGROUND

Components used in jet engines and other turbomachines are typically composed of stainless steel or other high strength metals. While such metals perform well, they are heavier than newly developed materials, such as composites, including chopped-fiber composites. Composite materials can be used for some components, thereby reducing the weight of overall system.

Because the characteristics of composites differ from those of steel, certain aspects of assembly and operation of composite components are addressed differently than those with steel components. For example, steel components can be bolted together with threaded bolts and nuts. The preload on the components varies with the amount of rotation of a threaded nut. To ensure a sufficiently tight connection, the nut can be rotated until a predetermined torque has been applied.

When composite components are used, however, the engagement between the nut and composite is more tightly regulated. The preload established by tightening the nut can adversely affect the composite if incorrectly established. For example, when a nut is tightened beyond the desired preload, the composite component can experience localized deformation or surface crushing. Additionally, overly high preloads can result in creep, wherein the material of the component recedes from the engagement site, resulting in space in which the nut can vibrate, potentially loosening. Similarly, insufficient tightening of the nut can lead directly to loosening through vibration. Accordingly, it is desirable to preload the nut and bolt coupling engagement between the composite component and other components accurately.

FR 2 841 273 discloses apparatus prestress a sealed anchor. The anchor comprises an extension screwed on an existing anchor, a spring washer and a nut.

Unfortunately, for relatively low preloads, such as those used with composite components, it is difficult to accurately measure the preload of such an assembly. Typically, a nut will spin freely until it all members of the coupling assembly are in contact, after which point, the preload is established by continued turning. However, the run-on, or free spin, portion of nut engagement, also results in an initial load during contact. The run-on portion of nut assembly is typically done by hand for ease of feedback as to when loading begins through increased difficulty in turning. Because manual tightening is often done at the outset, the positioning and actual initial preload can vary between repetitions of the engagement. Additionally, desired preloads for composite materials are typically relatively low. As a result, the initial load from run-on tightening can sometimes comprise a large portion of the desired overall tightening, or a relatively small amount. Consequently, further loading can have a large range of error, which can sometimes result in undesirably low or high preloads.

### BRIEF SUMMARY

The present invention in its various aspects is as set out in the appended claims. A method for loading a coupling assembly is provided. The coupling assembly comprises a first coupled member and a second coupled member, to a predetermined preload. The method comprises determining a compression distance of a resilient annular member of the coupling assembly corresponding to the predetermined preload, determining a rotation angle of a threaded fastener of the coupling assembly corresponding to the compression distance, inserting a threaded member of the coupling assembly through the resilient annular member, coupling the threaded fastener to the threaded member, and rotating the threaded fastener by the rotation angle.

A method of coupling a splash shield to a gear assembly with a predetermined preload is also provided. The method comprises determining a thickness compression distance of an elastomeric ring corresponding to the predetermined preload, determining a rotation angle of a threaded nut corresponding to an axial travel substantially equal to the thickness compression distance, coupling the splash shield to the gear assembly with a threaded bolt, positioning the elastomeric ring on the threaded bolt, positioning a washer on the threaded bolt against the elastomeric ring, threadedly engaging the threaded bolt with the threaded nut, assembling the threaded bolt, the gear assembly, the splash shield, the elastomeric ring, and the washer by removing separation therebetween, and further rotating the threaded nut by the rotation angle.

A method of preloading a nut and bolt assembly with a desired preload is also provided. The method comprises inserting a threaded bolt through a resilient ring, coupling a threaded nut to the threaded bolt, rotating the threaded nut through a free rotation portion of the threaded bolt, determining a compression distance of the resilient ring corresponding to the desired preload, determining a rotation amount of the threaded nut corresponding to the compression distance; and further rotating the threaded nut by the rotation amount.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a cross-sectional diagram of a preloaded coupling assembly;

FIG. 2 is an exploded view of the coupling assembly of FIG. 1;

FIG. 3 is a cross-sectional view of another embodiment of a preloaded coupling assembly;

FIG. 4 is a cross-sectional view of yet another embodiment of a preloaded coupling assembly; and

FIG. 5 is an illustration of a method of accurately preloading a threaded fastener assembly.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

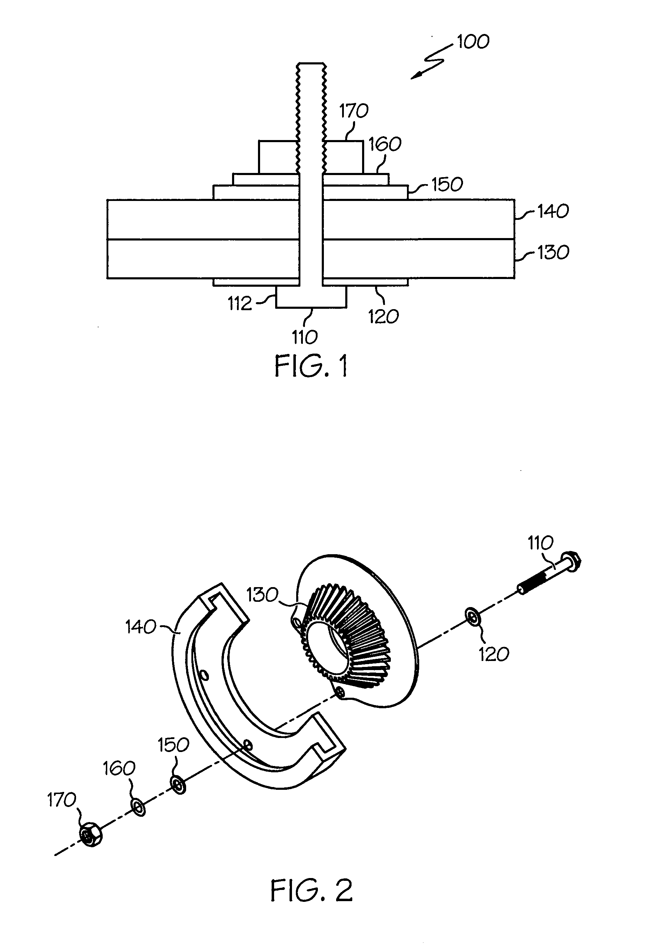

"Coupled" - The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in FIG. 1 depicts one exemplary arrangement of elements, additional intervening elements, devices, features, or components may be present in an embodiment of the depicted subject matter.

"Adjust" - Some elements, components, and/or features are described as being adjustable or adjusted. As used herein, unless expressly stated otherwise, "adjust" means to position, modify, alter, or dispose an element or component or portion thereof as suitable to the circumstance and embodiment. In certain cases, the element or component, or portion thereof, can remain in an unchanged position, state, and/or condition as a result of adjustment, if appropriate or desirable for the embodiment under the circumstances. In some cases, the element or component can be altered, changed, or modified to a new position, state, and/or condition as a result of adjustment, if appropriate or desired.

"Inhibit" - As used herein, inhibit is used to describe a reducing or minimizing effect. When a component or feature is described as inhibiting an action, motion, or condition it may completely prevent the result or outcome or future state completely. Additionally, "inhibit" can also refer to a reduction or lessening of the outcome, performance, and/or effect which might otherwise occur. Accordingly, when a component, element, or feature is referred to as inhibiting a result or state, it need not completely prevent or eliminate the result or state.

In addition, certain terminology may also be used in the following description for the purpose of reference only, and thus are not intended to be limiting. For example, terms such as "upper", "lower", "above", and "below" refer to directions in the drawings to which reference is made. Terms such as "front" "back", "rear", "side", "outboard", and "inboard" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

FIG. 1 illustrates an exemplary embodiment of a preloaded coupling assembly 100. The preloaded coupling assembly 100 as shown comprises a bolt 110, a bolt washer 120, first and second components 130, 140, a washer 150, a nut washer 160, and a nut 170. The nut 170 is tightened to a desired, predetermined preload. Accordingly, the coupling assembly 100 is inhibited from loosening due to vibrations or other mechanical effects.

The bolt 110 is used as an embodiment for descriptive purposes. In other embodiments, any threaded member, such as a threaded rod, or partially-threaded member, can be used. The threaded member can be composed of metal, such as a stainless steel, aluminum, high-strength alloy, such as a cobalt superalloy, or any other desired metal or non-metal, including plastics and composites. The bolt 110 preferably has at least one external surface which is threaded. The threads can have any desired pitch. The bolt 110 or other threaded member can have a flange 112 on one end. The flange 112, such as that shown on bolt 110, can have any desired size or shape. The flange 112 can contact a component with which the bolt 110 is coupled, or another intermediary object can be between them, such as the bolt washer 120.

The bolt washer 120 and nut washer 160 can be metal annular rings, such as steel or aluminum washers. Preferably, the washers 120, 160 are of the same size and type, though dissimilar geometries can be used as well. The washers 120, 160 can be annular or ringed members of any appropriate thickness.

The first and second components 130, 140 are any desired components for coupling using the coupling assembly 100. As explained above, accuracy of preloading of the coupling assembly 100 is particularly desirable when the coupling assembly 100 is engaging at least one composite member, such as a chopped-fiber composite. Thus, the first and second components 130, 140 are preferably composed of a composite. The techniques and practices described herein, however, can be used in a variety of different embodiments, such as those with metal, or other non-composite components. Additionally, the components 130, 140 can be composed of dissimilar materials, such as when the first component 130 is composed of a metal, while the second component 140 can is composed of a composite.

As can be seen in the illustrated exemplary embodiment shown in FIG. 2, the first component 130 is a spur gear assembly. In the illustrated embodiment, at least a portion of the spur gear assembly can be composed of metal. The first component 130 can have at least one hole through which the bolt 110 or other threaded member can pass. Additionally, the spur gear assembly can be lubricated. It can be desirable to inhibit the lubricant from spraying nearby components during rotation of the spur gear or other assembly components. Accordingly, the second component 140 is a splash shield adapted to contain at least some lubricant that would otherwise be otherwise splashed away during operation. The second component 140 is preferably composed of a composite, such as the chopped-fiber plastic previously described. The second component 140 preferably also has a hole through which the bolt 110 or other threaded member can be inserted.

The washer 150 is a resilient annular member with sufficient inner diameter to surround the bolt 110. The outer diameter of the washer 150 can be of any appropriate size, though is preferably greater than the nut washer 160. Some exemplary embodiments of suitable resilient members include rubber, as well as other elastomeric and viscoelastomeric materials, as well as other resilient materials, such as silicone. Preferably, the resilient annular member has a linear stress-strain response. Thus, a desirable resilient annular member responds to compressive force in a manner predicted by Hooke's law for the range of forces corresponding to the range of desired preloads for the coupling assembly 100. Similarly, the selected material preferably has a known modulus of elasticity. The washer 150, therefore, can be any of a variety of types of materials and sizes, but preferably is predictably elastically resilient and interoperates with the bolt 110 or other selected threaded member.

The nut 170 can be a threaded fastener of any desired type and size appropriate for use with the bolt 110. Thus, the nut 170 preferably has an internal, threaded surface pitched to engage with the threaded surface of the bolt 110. Although the pitch of the bolt 110 and nut 170 can be the same, in certain embodiments, they can be different, so long as it does not inhibit threaded engagement. The nut 170 can have planar sections on its outer surface for engagement with tightening tools, such as wrenches, including torque wrenches.

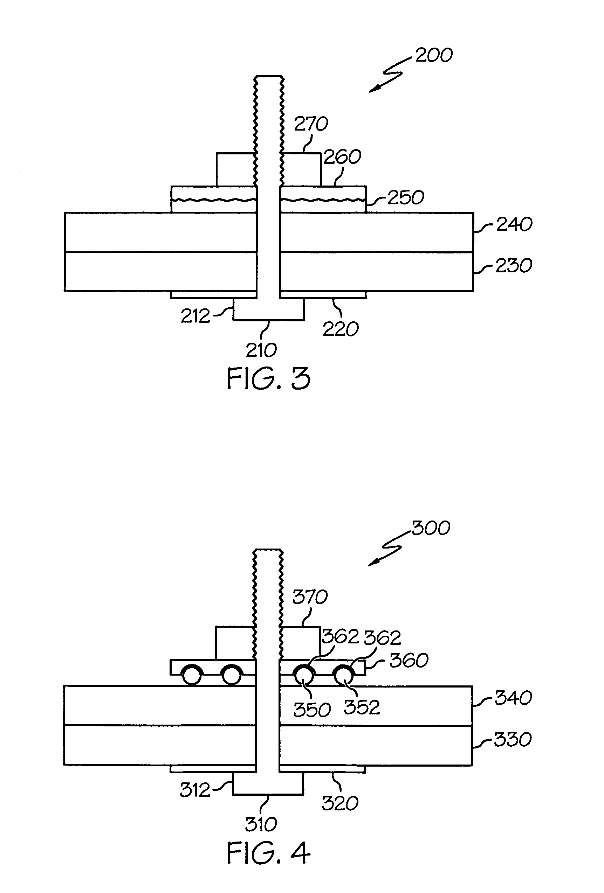

FIG. 3 illustrates an exploded view of the embodiment of FIG. 1. FIG. 3 illustrates another embodiment of a coupling assembly 200. Unless otherwise specified, the components are similar to those described in regard to FIGS. 1 and 2, except that the indicator numbers have been incremented by 100. FIG. 2 illustrates an embodiment of the coupling assembly 200 in which the rubber washer 250 and nut washer 260 are integrally formed. Thus, the rubber washer 250 can be coupled to the nut washer 260 using any appropriate fastening or affixation technique, such with an adhesive or bonding agent.

FIG. 4 illustrates another embodiment of a coupling assembly 300. Unless otherwise specified, the components are similar to those described in regard to FIGS. 1 and 2, except that the indicator numbers have been incremented by 200. In FIG. 4, the coupling assembly 300 shown comprises an annular resilient member embodied as a first ring 350 surrounding the bolt 310. The first ring 350 has a circular cross-section, and can have a substantially toroidal shape, similar to an O-ring. The first ring 350 can have different cross-sections, as well. The first ring 350 can be disposed at a position corresponding to a groove 362 in the underside of the nut washer 360. A second ring 352 can also be used, similarly positioned in a groove 362. The second ring 352 can have a larger size than the first ring 350, resulting in the depicted arrangement, wherein the first ring 350 is positioned inside the second ring 352. Preferably, the rings 350, 352 have dissimilar sizes, so as not to overlap beneath the nut washer 360.

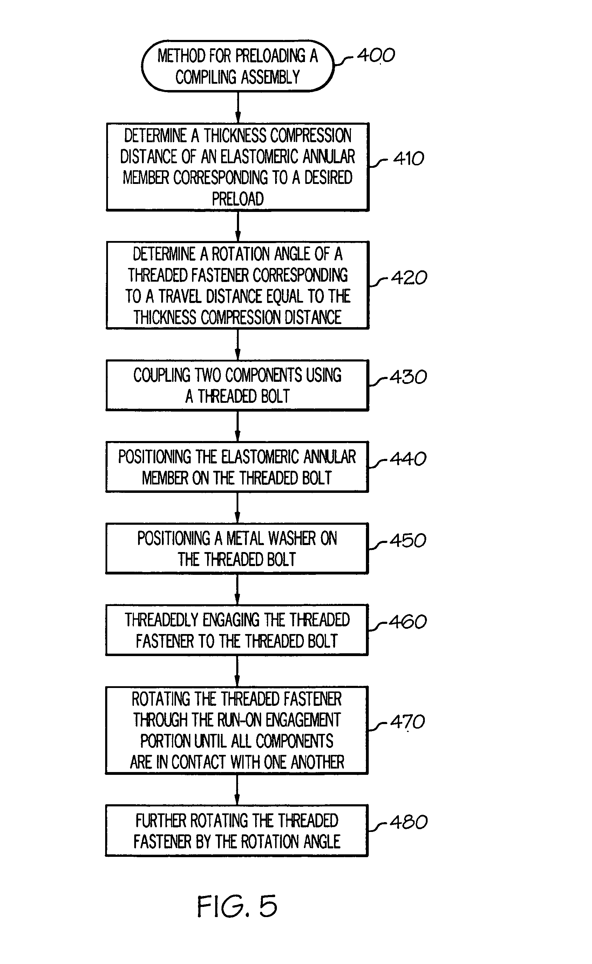

FIG. 5 illustrates a method for preloading a coupling assembly, such as the assemblies illustrated in FIGS. 1-4. The various tasks performed in connection with method 400 may be performed by software, hardware, firmware, or any combination thereof. For illustrative purposes, the following description of method 400 may refer to elements mentioned above in connection with FIGS. 1-4. In practice, portions of method 400 may be performed by different elements of the described system, e.g., bolt 110, washer 150, or nut 170. It should be appreciated that method 400 may include any number of additional or alternative tasks, the tasks shown in FIG. 5 need not be performed in the illustrated order, and method 400 may be incorporated into a more comprehensive procedure or method having additional functionality not described in detail herein.

To accurately tighten a coupling assembly, such as those previously described, to a predetermined preload, a user can first determine a thickness compression distance of a resilient annular member corresponding to the desired preload (task 410). The thickness compression distance is the amount of decrease in thickness the resilient annular member will exhibit when experiencing the desired preload. Thus, the thickness compression distance is a strain corresponding to the stress from the preload. The thickness compression distance can be determined from known characteristics of the resilient annular member, such as the geometric dimensions and material properties, such as the modulus of elasticity. The thickness compression distance can correspond to a reduction in thickness of the resilient annular member by as little as 1-2% of overall thickness, or as much as 25-30%, or more.

After determining the thickness compression distance, the user can determine a rotation angle of the nut or other threaded fastener which corresponds to a travel distance equal to the thickness compression distance (task 420). For a threaded fastener, a set amount of rotation will correspond to a set axial travel distance along a threaded member, such as a bolt. Accordingly, for the selected threaded fastener, from the pitch of the threads, a user can determine a rotation angle which will result in travel along the threaded member equal to the thickness compression distance. Such a rotation amount will depend on the size of the desired preload, as well as the material properties of the annular resilient member. Some rotation angles can be as small as 15-30°, while other rotation angles corresponding to less stiff resilient members, or greater preloads, can be more than one full rotation, such as 400-500°. The exact rotation angle will depend on various characteristics of the coupling assembly and the desired preload.

Therefore, for two components which it is desirable to couple together, such as the first and second components 130, 140, a user can use a threaded member to couple them together (task 430). A washer, such as bolt washer 120, can also be used, if desired. An elastomeric annular member, such as the rubber washer, can be then positioned on the threaded member (task 440). The elastomeric annular member can be the same used for the determining steps 410, 420. Optionally, a metal washer can then be positioned on the threaded member against the elastomeric annular member (task 450). As previously described, in certain embodiments, the elastomeric annular member can be integrally formed with the metal washer. Alternatively, the metal washer can have one or more grooves to accommodate the elastomeric annular members.

After the metal washer is positioned on the threaded member, a threaded fastener can be threadedly engaged to the threaded member (task 460). Thus, the pitch of the threaded fastener and threaded member are preferably selected to permit interoperation therebetween. After the initial threaded engagement, in some embodiments, some embodiments of the assembly will have some space between at least some of the components. Accordingly, initial advancement of the threaded fastener will not induce a preload to the coupling assembly as movement of the threaded fastener will instead reduce separation between the components. In some embodiments, the components can all be evenly spaced apart, while in other components, all of the components, except the threaded fastener can be tightly packed, resulting in space along the threaded member for the fastener to advance without contacting any component. Regardless of the distribution of components, the run-on portion or free-rotation portion of the engagement is that in portion which rotation of the threaded fastener does not induce a preload in the coupling assembly.

The threaded fastener, therefore, can be rotated through the run-on or free-rotation portion until all the components are in contact (task 470). Such rotation can be performed by hand, and is typically not strenuous or difficult to do by hand. To prevent preloading at the end of the run-on period, an indicator can be used to alert the user that contact has been established among the components. For example, a conductive path can be established, resulting in a feedback through a light or sound or other indicator.

After the threaded fastener has been moved through the run-on or free rotation portion, it can be subsequently rotated by the rotation angle (task 480). After the threaded fastener has been turned an amount equal to the rotation angle, the resilient annular member will be compressed by an amount equal to the compression thickness. The coupling assembly will have a preload equal, or substantially equal to the desired preload. Accordingly, a known preload can be produced in a coupling assembly

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A method for loading a coupling assembly (300) comprising a first coupled member (330) and a second coupled member (340), to a predetermined preload, the method comprising:
determining a thickness compression distance of a resilient annular member (350, 352) of the coupling assembly corresponding to the predetermined preload, the thickness compression distance corresponding to an amount of decrease in thickness that the resilient annular member will exhibit when experiencing the predetermined preload;
determining a rotation angle of a threaded fastener (370) of the coupling assembly corresponding to the thickness compression distance;
inserting a threaded member (310) of the coupling assembly through the resilient annular member;
coupling the threaded fastener to the threaded member; and
rotating the threaded fastener by the determined rotation angle.

2. The method of Claim 1, wherein determining the compression distance of the resilient annular member (350, 352) comprises calculating the compression distance using linear-elastic properties of the resilient annular member.

3. The method of Claim 1, wherein the threaded fastener (310) comprises an internal face having a first threaded surface, the first threaded surface having a first pitch.

4. The method of Claim 3, wherein determining the rotation angle of the threaded fastener includes determining a travel distance corresponding to the first pitch.

5. The method of Claim 4, wherein the threaded member has an external face having a second threaded surface, the second threaded surface having a second pitch.

6. The method of Claim 1, further comprising inserting a washer (120) between the resilient annular member and the first coupled member.

7. The method of Claim 6, wherein the threaded member comprises a flange (112) on one end, and the method further comprises positioning the second coupled member against the flange (112), the first coupled member against the second coupled member, the resilient annular member against the first coupled member, and the washer (120) against the resilient annular member.

8. The method of Claim 7, wherein rotating the threaded fastener comprises running the threaded fastener on the threaded member until it is positioned against the washer (120) and further rotating the threaded fastener by the rotation angle.

## Patentansprüche

1. Verfahren zum Laden einer Kopplungsanordnung (300), die ein erstes gekoppeltes Element (330) und ein zweites gekoppeltes Element (340) umfasst, mit einer Vorbestimmten Vorspannung, wobei das Verfahren Folgendes umfasst:
Bestimmen einer Dickenkompressionsdistanz eines elastischen ringförmigen Elements (350, 352) der Kopplungsanordnung entsprechend der Vorbestimmten Vorspannung, wobei die Dickenkompressionsdistanz einem Ausmaß der Dickenverringerung entspricht, die das elastische ringförmige Element beim Einwirken der Vorbestimmten Vorspannung aufweist;
Bestimmen eines Drehwinkels eines Gewindebefestigungselements (370) der Kopplungsanordnung entsprechend der Dickenkompressionsdistanz;
Einsetzen eines Gewindeelements (310) der Kopplungsanordnung durch das elastische ringförmige Element;
Koppeln des Gewindebefestigungselements mit dem Gewindeelement; und
Drehen des Gewindebefestigungselements um den bestimmten Drehwinkel.

2. Verfahren nach Anspruch 1, bei dem das Bestimmen der Kompressionsdistanz des elastischen ringförmigen Elements (350, 352) das Berechnen der Kompressionsdistanz unter Nutzung linear-elastischer Eigenschaften des elastischen ringförmigen Elements umfasst.

3. Verfahren nach Anspruch 1, bei dem das Gewindebefestigungselement (310) eine interne Fläche mit einer ersten Gewindeoberfläche umfasst, wobei die erste Gewindeoberfläche eine erste Steigung aufweist.

4. Verfahren nach Anspruch 3, bei dem das Bestimmen des Drehwinkels des Gewindebefestigungselements das Bestimmen einer Wegdistanz entsprechend der ersten Steigung einschließt.

5. Verfahren nach Anspruch 4, bei dem das Gewindeelement eine externe Fläche mit einer zweiten Gewindeoberfläche hat, wobei die zweite Gewindeoberfläche eine zweite Steigung aufweist.

6. Verfahren nach Anspruch 1, das weiterhin das Einsetzen einer Unterlegscheibe (120) zwischen dem elastischen ringförmigen Element und dem ersten gekoppelten Element umfasst.

7. Verfahren nach Anspruch 6, bei dem das Gewindeelement einen Flansch (112) an einem Ende umfasst, und wobei das Verfahren weiterhin das Positionieren des zweiten gekoppelten Elements gegen den Flansch (112), des ersten gekoppelten Elements gegen das zweite gekoppelte Element, des elastischen ringförmigen Elements gegen das erste gekoppelte Element und der Unterlegscheibe (120) gegen das elastische ringförmige Element umfasst.

8. Verfahren nach Anspruch 7, bei dem das Drehen des Gewindebefestigungselements das Weiterbewegen des Gewindebefestigungselements auf dem Gewindeelement, bis es gegen die Unterlegscheibe (120) positioniert ist, sowie das weitere Drehen des Gewindebefestigungselements um den Drehwinkel umfasst.

## Revendications

1. Procédé de charge d'un ensemble d'accouplement (300) comprenant un premier organe accouplé (330) et un deuxième organe accouplé (340), à une précharge prédéterminée, le procédé comprenant les étapes consistant à :
déterminer une distance de compression d'épaisseur d'un organe annulaire élastique (350, 352) de l'ensemble d'accouplement correspondant à la précharge prédéterminée, la distance de compression d'épaisseur correspondant à une quantité de diminution d'épaisseur que l'organe annulaire élastique subira lorsqu'il sera soumis à la précharge prédéterminée ;
déterminer un angle de rotation d'une attache filetée (370) de l'ensemble d'accouplement correspondant à la distance de compression d'épaisseur ;
insérer un organe fileté (310) de l'ensemble d'accouplement à travers l'organe annulaire élastique ;
accoupler l'attache filetée à l'organe fileté ; et faire tourner l'attache filetée de l'angle de rotation déterminé.

2. Procédé selon la revendication 1, dans lequel la détermination de la distance de compression de l'organe annulaire élastique (350, 352) comprend le calcul de la distance de compression en utilisant des propriétés linéaires élastiques de l'organe annulaire élastique.

3. Procédé selon la revendication 1, dans lequel l'attache filetée (310) comprend une face interne ayant une première surface filetée, la première surface filetée ayant un premier pas.

4. Procédé selon la revendication 3, dans lequel la détermination de l'angle de rotation de l'attache filetée comprend la détermination d'une distance de déplacement correspondant au premier pas.

5. Procédé selon la revendication 4, dans lequel l'organe fileté a une face externe ayant une deuxième surface filetée, la deuxième surface filetée ayant un deuxième pas.

6. Procédé selon la revendication 1, comprenant en outre l'insertion d'une rondelle (120) entre l'organe annulaire élastique et le premier organe accouplé.

7. Procédé selon la revendication 6, dans lequel l'organe fileté comprend une bride (112) à une extrémité, et le procédé comprend en outre le positionnement du deuxième organe accouplé contre la bride (112), du premier organe accouplé contre le deuxième organe accouplé, de l'organe annulaire élastique contre le premier organe accouplé, et de la rondelle (120) contre l'organe annulaire élastique.

8. Procédé selon la revendication 7, dans lequel la rotation de l'attache filetée comprend le passage de l'attache filetée sur l'organe fileté jusqu'à ce qu'elle soit positionnée contre la rondelle (120) et la rotation supplémentaire de l'attache filetée de l'angle de rotation.
